# EUROPEAN PATENT APPLICATION

(11) **EP 3 556 571 A1**
(43) Date of publication of application: **23.10.2019**
(21) Application number: 19160112.9
(22) Date of filing: 28.02.2019
(51) Int. Cl.: B43L 13/02, G06K 15/22

(54) **VERTICAL PLOTTER WITH AN IMPROVED PRINTING HEAD**

(30) Priority: 16.04.2018 IT 201800004529
(71) Applicant: Makr Shakr Srl, 10124 Torino (IT)
(72) Inventor: ROSSETTI, Emanuele, 10124 Torino (IT); BULGARELLI, Andrea, 10124 Torino (IT)
(74) Representative: Lisa, Elisabetta

(57) **Abstract**

A vertical plotter (1) has a writing head (3) movable on a writing surface and comprises at least one gripping element (17) for releasably locking an ink writing stylus instrument (2), an actuator (16) configured to move the gripping element (17) in a retracted position in which the writing instrument is spaced from the writing surface and an advanced position in which the writing instrument contacts the writing surface, a control unit (ECU) configured to control the actuator (16) so as to draw one or more lines on the writing surface when the writing head (3) moves. The plotter further comprises a closing device (18) for the writing instrument movably selectively between an open position in which the gripping element (17) is in the advanced position so that a writing tip (P) touches the surface writing outside the writing head (3) and in a closed position in which the gripping element (17) is in the retracted position and a cavity (20) is closed so as to establish a controlled environment for delaying a drying of the writing instrument.

## Description

### TECHNICAL FIELD

The present invention refers to a vertical plotter for drawing or writing on a vertical or inclined writing surface.

### STATE OF THE ART

A vertical plotter is fixed to a wall or other inclined surface to write, draw or a combination of both. In particular, a vertical plotter uses the action of gravity acceleration for downward movements.

The need is felt for when the vertical plotter uses ink writing stylus tools, to hinder the ink drying of the writing instrument mounted on the plotter in order to increase its working life.

This is particularly important when commercial stylus tools with erasable thermosensitive ink are used, in particular because it becomes transparent, due to exposure to a heat source that carries the ink above a predetermined temperature threshold.

### SCOPES AND BRIEF DESCRIPTION OF THE INVENTION

The object of the present invention is to provide a vertical plotter capable of satisfying the aforementioned requirements.

The object of the present invention is achieved by a vertical plotter having a writing head movable on a writing surface and comprising at least one gripping element for releasably locking an ink-writing stylus instrument, an actuator configured to move the ink gripping element in a retracted position in which the writing instrument is spaced from the writing surface and an advanced position in which the writing instrument contacts the writing surface, a control unit configured to control the actuator so as to draw one or more lines on the writing surface when the writing head moves, comprising a closing device for the writing instrument selectively movable between an open position in which the gripping element is in the advanced position in such a way that a writing tip touches the writing surface outside the writing head and a closed position in which the gripping element is in the retracted position and a cavity is closed so as to establish a controlled environment for delaying a drying of the writing instrument.

Through the mobile closure the tip of the writing instrument is protected when the print head is not in use and the writing instrument is mounted on the print head. It is therefore possible to keep the writing instrument stably mounted on the print head and to avoid mounting and dismounting the printing tool respectively before and after use.

Preferably, the cavity communicates with a through opening facing the writing surface when the closure is in the open position; and is suitable for housing the tip of the writing tool when the closure is in the closed position.

The cavity is fixed with respect to the writing instrument and this allows to accommodate more writing instruments in the cavity.

Preferably, the actuator comprises a motorized rotating drum carrying the gripping element and closing so that the closed position is reached in a predefined angular position of the drum.

It is thus possible to manage the gripping element and the closure through a single actuator.

Preferably, the cavity is inside a compartment of the print head and in which the drum closes the compartment opposite to the opening.

The controlled atmosphere environment is incorporated inside the print head.

Preferably, the print head comprises an inclined guide which engages with the gripping element to move the gripping element to the retracyed or advanced position in a manner dependent on the direction of rotation of the drum.

This embodiment limits the number of potentially deformable and perishable components, such as springs, or of high cost, as additional actuators.

Preferably, a contact seal is provided which contacts the closure at least in the closed position to seal the controlled environment.

The exchange of air within the controlled environment is reduced. The seal can be either fixed around the opening or carried by the closure.

Preferably, the gripping element comprises a further contact seal adapted to surround and contact the writing instrument.

The exchange of air within the controlled environment is reduced.

Preferably, it is provided an erasing element acting on the ink of the writing instrument and wherein the control unit is programmed to control the gripping element to draw a digital image and select between a first and a second pre-defined erasing method by the erasing element based on the number of colored pixels of the digital image.

In this way the time to erase is decreased.

Preferably, an erasing element is provided having a heat source for heating the ink of the writing instrument and providing an erasing effect on the writing surface.

This avoids moving and consumption components such as traditional erasers by abrasion.

Preferably, at least one motorized roller is provided for winding and unwinding a flexible element and causing a movement of the print head on the writing surface on the basis of command signals coming from the control unit; and mechanically connected to the print head so as to move on the writing surface together with the print head.

This is the embodiment shown in the figures. It is also possible that the print head is connected to other motion systems.

Other advantages of the present invention are discussed in the description.

### BRIEF DESCRIPTION OF THE FIGURES

The invention is described below on the basis of non-limiting examples illustrated by way of example in the following figures, which refer respectively to:
- Figure 1: an upper perspective view of a vertical plotter according to the present invention;
- Figure 2: an exploded view of Figure 1;
- Figure 3: an exploded view of a plotter print head of Figure 1;
- Figures 4 to 5: respective views exploded with different perspectives of the print head;
- Figure 6: a lower perspective view of the assembled print head.

### DETAILED DESCRIPTION OF THE INVENTION

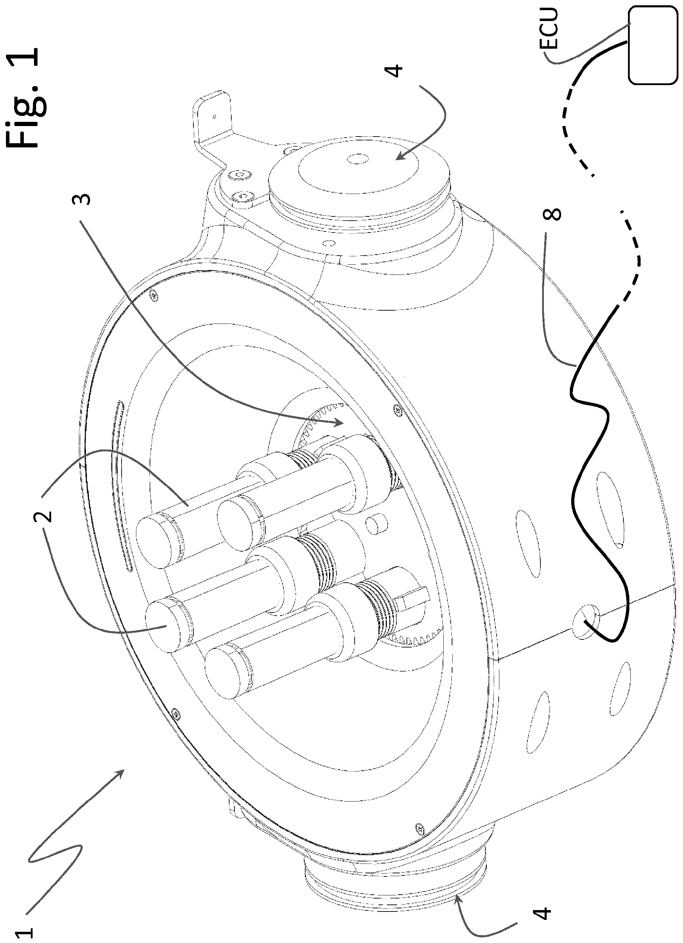

Figure 1 shows, as a whole, a vertical plotter 1 for at least one ink writing instrument 2 such as felt-tip pens or pens comprising a printing head 3 and motorized rollers 4 for winding or unwinding a respective flexible element, such as a wire or the like, and thus cause the movement of the motorized print head 3 on a writing surface (not shown) such as the painted surface of an interior wall of a room or a commercial space, or of an external wall of a building, suitably finished for the writing instrument, or of a support, for example of woven or film plastic material, fixed to an internal or external wall through a special frame or other method. The wires of the motorized rollers are fixed to the writing surface.

In particular, as shown in the figure, the writing instruments can be a plurality and at least one writing instrument 2 is a stylus.

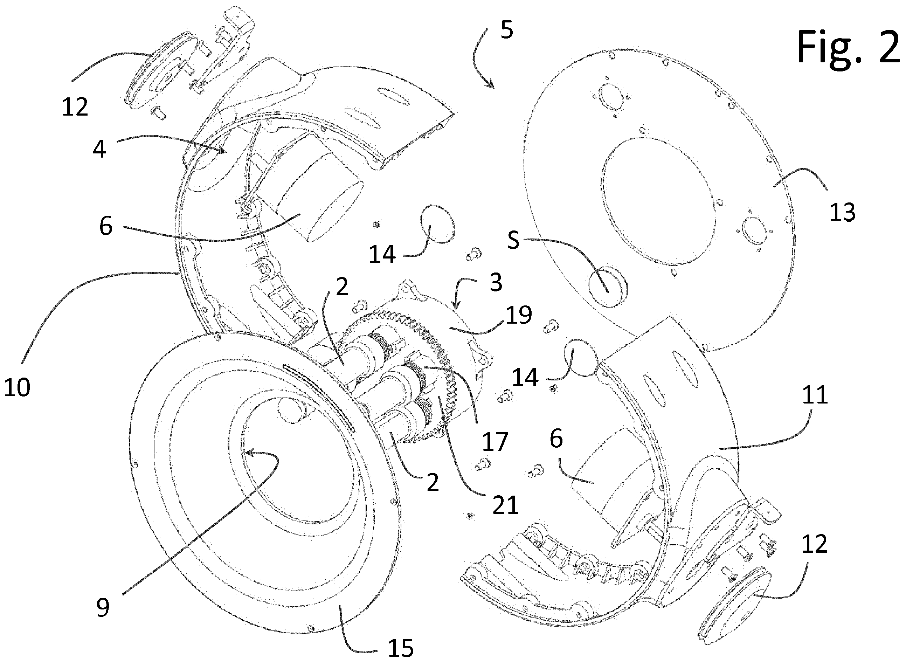

The vertical plotter 1 also comprises an electronic control unit ECU for controlling print head 3 and the motorized rollers 4; and (figure 2) a shell 5 housing a plurality of motors 6 of the respective motorized rollers 4 and the printing head 3. In particular, the shell 5 mechanically connects the motorized rollers 4 to the printing head 3, preferably in a rigid manner, and protects power supply connections (not shown) of the motors 6 which, according to the non-limiting embodiment, receive electric current from respective wires combined in a cable 8 connected to the ECU. The cable 8 further comprises a print head supply wire 3. Therefore, shell 5 carries both print head 3 and motors 6 when print head 3 is in use and the cable 8 follows shell 5 in motion on the writing surface.

Preferably, shell 5 is open on the opposite side to the writing surface to allow, via a through opening 9 facing print head 3, to replace one or more writing instruments 2 carried by the print head. When a writing instrument is mounted on print head 3, a rear portion opposite a writing tip is surrounded or in relief or both by through opening 9.

According to the embodiment of figures 1 and 2, shell 5 comprises a first and a second lateral portion 10, 11 from each of which a roller 12 of the relative motorized roller 4 protrudes. To each lateral portion 10, 11 is furthermore rigidly connected the relative motor 6. The printing head 3 is arranged between the latter, fixed to each of the lateral portions 10, 11 by means of a side spacer 13. As shown in Figure 2, preferably shell 5 comprises spacer 13, which in use is facing and adjacent to the writing surface and sliding blocks 14 contacting the writing surface. On the opposite side of spacer 13, shell 5 comprises a closing wall 15 fixed to lateral portions 10, 11 and defining through-opening 9.

Moreover, printing head 3 comprises an adjacent heat source S contacting the writing surface and is configured to generate heat such as to dry or sublimate or make transparent the ink of writing instruments 2 on the writing surface and produce an effect of erasing without abrasions. In this way the drawings, writings or signs of the writing instruments 2 on the writing surface are deleted. Heat source S is preferably powered electrically by a wire bundled to the others within cable 8.

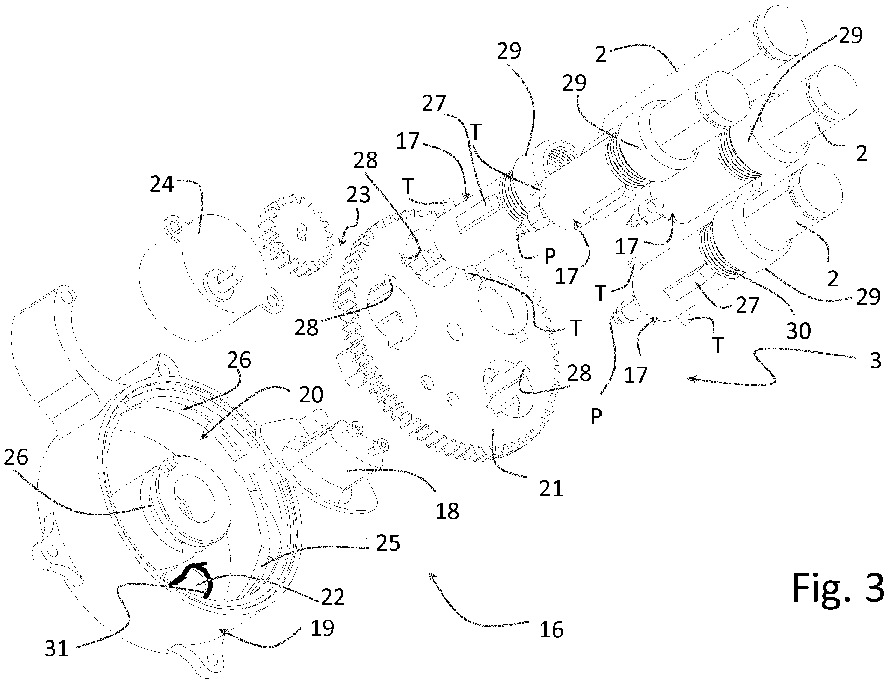

Figure 3 shows print head 3 that comprises an actuator 16, one or more gripping elements 17 for respective writing instruments movable between an advanced position and a retracted one and a movable closure 18 for selectively closing a controlled environment within which writing tips P of writing instruments 2 are housed to delay the drying of the ink.

Preferably, actuator 16 controls gripping element 17 to reach the advanced or retracted position, and both closure 18 and the selection of the desired writing instrument 2 in the case where print head 3 is configured for a plurality of writing tools 2.

According to a preferred embodiment of the present invention, actuator 16 comprises a hollow body 19 defining internally a compartment 20 in which the controlled atmosphere is defined, a rotating drum 21 rotatable around an axis passing through hollow body 19 and carrying both gripping elements 17 and closure 18.

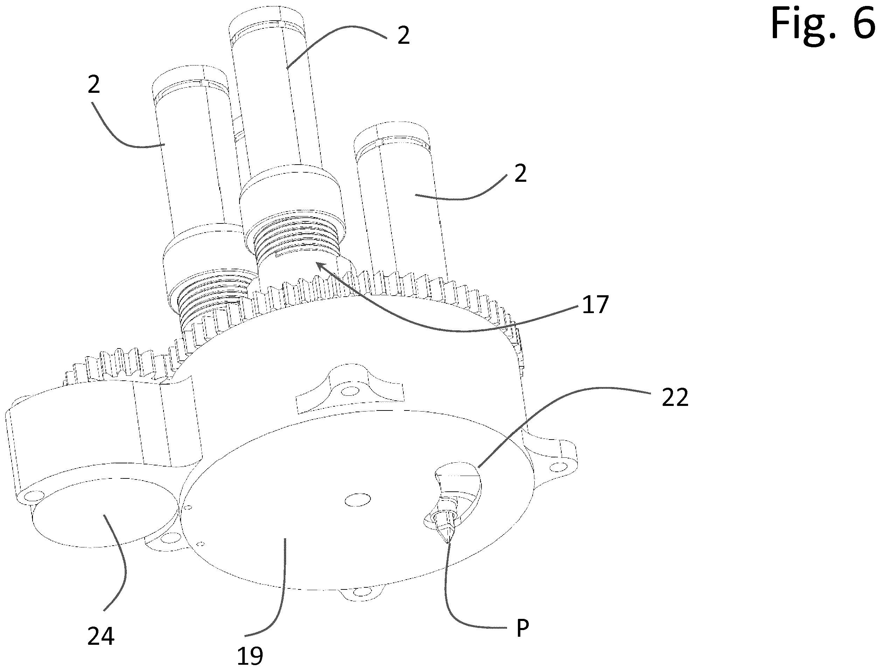

In the retracted position, gripping elements 17 are configured so as to keep the writing tips P inside compartment 20 while closure 18 closes compartment 20 to slow down the drying of the ink; in the advanced position, closure 18 is open and a writing tip P protrudes from compartment 20 to contact the writing surface (Figure 6).

Therefore the position of gripping elements 17 and that of closure 18 is coordinated and, according to a preferred embodiment, both gripping elements 17 and closure 18 are carried by rotating drum 21 at pre-determined angular distances and hollow body 19 defines a through opening 22 which is either closed by closure 18 to preserve the environment inside hollow body 19 or is opened and crossed by a writing tip P in an advanced position. In particular, closure 18 comprises a wall which, in the closed position, is superimposed on through opening 22. Hollow body 19 is closed on the opposite side to through opening 22 from the drum and is controlled for rotation by a gear 23 and a rotary motor 24, preferably fixed to the hollow body 19. In particular, the gear between the motor 24 and the drum 21 is a reducer.

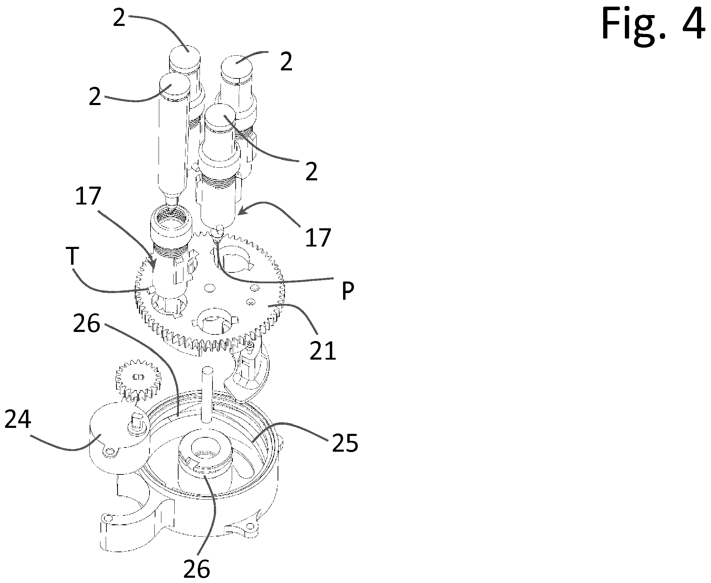

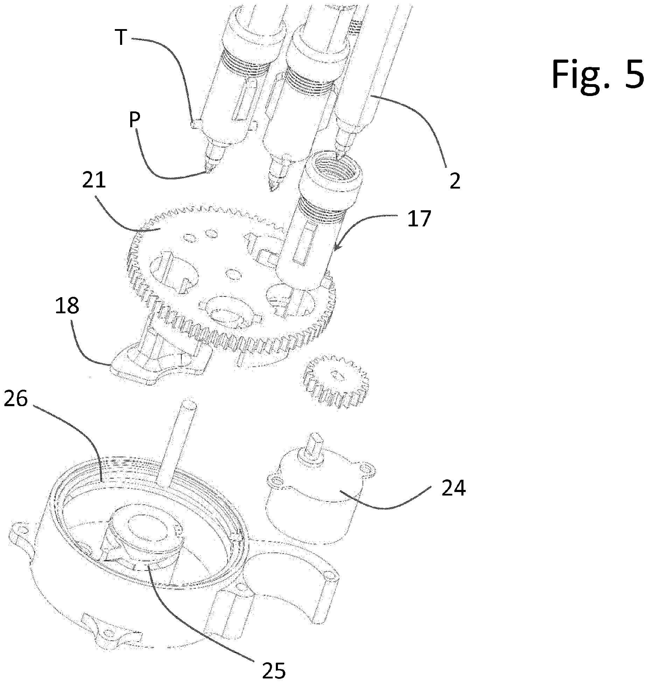

The advanced or retracted position is controlled by the combination of the rotation of drum 21 and an inclined guide 25 to which each gripping element 17 is slidably engaged. For example, inclined guide 25 is a groove and each gripping element 17 comprises at least one pin T engaged in the groove. Preferably, inclined guide 25 is inside compartment 20. Therefore, when drum 21 rotates in a first direction of rotation and one of gripping elements 17 engages guide 25, the advanced position is achieved. When the drum 21 reverses the direction of rotation, gripping element 17 withdraws and disengages from guide 25. When gripping elements 17 are disengaged from guide 25 they are connected to a track 26 lying in a plane perpendicular to the axis of rotation of the drum 21 and connected to the guide 25 so that when a gripping element 17 disengages from the guide 25, it converges onto the track 26 and vice versa. Moreover, guide 25 is connected to track 26 so that in a first direction of rotation of drum 21, when one of gripping elements 17, in particular the relative pin T, surpasses the junction between guide 25 and track 26, no engagement is ever performed between gripping element 17 and guide 25. Instead, in a second direction of rotation of drum 21, when one of gripping elements 17 is at the intersection between the guide 25 and track 26, gripping element 17 and guide 25 always engage. In particular, the direction of rotation of drum 21 that realizes the advanced position of the gripping element 17 (figure 6) is the direction of rotation in which gripping element 17 and guide 25 engage (engagement direction of rotation). Consequently, the direction of rotation of drum 21 which realizes the retracted position of gripping element 17 is the direction of rotation in which gripping element 17 and guide 25 do not engage and gripping element 17 always surpasses the junction between guide 25 and track 26 (disengagement rotation direction). Figures 4 and 5 show how guides 25 and tracks 26 can be arranged on opposite sides of each gripping element 17 and, consequently, each gripping element 17 has a pair of opposite pins T.

Preferably, a special inclined tab (not shown) inclined along track 26 is partially superimposed on the junction between guide 25 and track 26 so that gripping element 17, in particular the relative pin T, "jumps" on the junction when drum 21 turns in the direction of rotation of the disengagement. The same tab, in the opposite direction of rotation, pushes instead gripping element 17 in guide 25. The tab can be flexible or rigid.

To select the gripping element 17 associated with the selected writing instrument 2 through the control unit ECU, motor 24 rotates drum 21 in the disengagement direction of rotation until the gripping element 17 faces the junction after having passed it. The motor 24 stops and reverses the direction of rotation allowing the gripping element 17 to be deviated in guide 25 until it reaches the advanced position.

The angular position of each gripping element 17 and of closure 18 is controlled by motor 24 which is either a stepping motor or the like controlled by the ECU in an open loop so that each command signal corresponds to a predefined angular step, also by several turns (embodiment of the figures); or it is a motor controlled by the ECU in closed loop via the presence of an angular position sensor, for example of drum 21 and / or of gear 23 (embodiment not shown). For example, motor 24 turns at a constant speed and the rotation time in one direction and in the other allows, taking into account the gear ratio of gear 23, to define in open loop the position of gripping elements 17 and of closure 18. Motor 24 is preferably supplied and controlled by one or more wires which, by means of cable 8, are connected to the control unit ECU.

Each gripping element 17 is connected to drum 21 in a rigid way to the rotation and movable to the translation along a direction such as to reach the writing surface in the advanced position. In this way, the friction between pins T and guide 25 or track 26 is opposed and the relative coupling is guaranteed. According to the embodiment of the figures, this direction is parallel to the axis of rotation of drum 21 and a prismatic coupling is provided between each gripping element 17 and drum 21. Preferably the prismatic coupling comprises one or more projections 27 parallel to the axis of rotation of drum 21 carried by the relative gripping element 17 and corresponding rectilinear grooves 28.

Preferably, in order to replace the writing instrument 2 when the ink is exhausted, each gripping element 17 comprises a ring nut 29 that is screwed and, by acting on a radially deformable threaded portion 30, locks by friction the writing instrument 2 carried or housed in the relative gripping element 17. When ring 29 is unscrewed, threaded portion 30 resiliently expands and thus unlocks writing instrument 2 that can be replaced or adjusted by a user in the position suitable for writing and / or for closing of compartment 20 to avoid interference, for example, with through opening 22 during the rotation of drum 21.

According to the embodiment of the figures, pins T and projections 27 are axially spaced and are angularly out of phase so that also pins T can slide during assembly in grooves 28 that, after a rotation of the gripping element around a proper axis, meet and cooperate with projections 27.

Preferably, the environment controlled for slowing the drying of the writing instruments 2 is maintained through the control and in particular the limitation of the air exchange by means of suitable contact seals.

For example, a seal 31 surrounds through opening 22 and contacts the closure 18 in the closed position.

Alternatively or in combination, gripping elements 17, which have a generally sleeve shape, comprise a seal (not shown) arranged in use in contact with the relative writing instrument 2 so as to prevent excessive airflow through the radial space between the felt-tip pen and an inner wall of the gripping element 17. Preferably, the seal is arranged so as to be pressed against the writing element 2 when the relative ring 29 is screwed.

According to a preferred embodiment of the present invention, the control unit ECU controls the position of the print head 3 so that heat source S alternatively performs either a first method or a second method for erasing so as to reduce the time to erase.

Preferably, a first method provides to track the substantially one-dimensional path traced by print head 3 during the writing associated with a digital image processed by the control unit ECU and uploaded for example by the user. In particular, the path followed by heat source S of the print head 3 follows the path of the signs that writing instruments 2 leave on the writing surface on the basis of the processing of the digital image chosen by the user. For example, if the digital image includes a rectangular colored background and the perimeter of a triangle in chromatic contrast with the background, the user can decide to eliminate the background by means of a graphic function implemented by the ECU and let print head 3 executes on the writing surface the triangle by means of command signals received from control unit ECU. The control unit has processed the digital image to generate the activation / deactivation commands of motorized rollers 4 to move print head 3 and the motion controls of gripping elements 17 through actuator 16 in order to draw the triangle on the writing surface. The erasing method which follows the traced path provides that print head 3 is moved by the control unit ECU so that the heat source, after being turned on, follows the triangle on the writing surface and does not transit, or only transits in minimum part, against the background of the triangle. In this way, the time required to delete the triangle is relatively low.

A second method for erasing depends on the two-dimensional area covered by the image previously drawn by print head 3. In particular, the path followed by print head 3 is to cover entirely with the heat source, by means of a pre-defined path optimization method, the smallest area that circumscribes, through a polygon, the signs that writing instruments 2 leave on the writing surface on the basis of the digital image processing chosen by the user and already drawn. According to the aforementioned example, if the drawn image also includes the background, the ECU control unit identifies the rectangular area of the background and controls the print head so that heat source S follows, within that rectangular area, a progressive serpentine from right to left or from top to bottom, covering the entire rectangular area.

Preferably, in both cases or only in the tracking method, the control unit ECU stores the movement coordinates of print head 3 when one of gripping elements 17 is in an advanced position to draw the digital image on the writing surface and bases the print head 3 movement instructions to erase on the stored writing coordinates. In particular, during writing the two-dimensional coordinates associated with the pixels of the digital image that are drawn on the writing surface are stored.

According to a preferred embodiment of the present invention, the control unit ECU selects between the first and the second method to erase on the basis of the number of pixels of the digital image drawn on the writing surface. When this number is lower than a predefined threshold, possibly defined in relation to the total number of pixels of the digital image chosen by the user and drawn on the writing surface, the ECU control unit selects and proceeds according to the first method to erase; otherwise the control unit ECU selects and proceeds according to the second method to erase.

## Claims

1. A vertical plotter (1) having a writing head (3) movable on a writing surface and comprising at least a gripping element (17) to releasably clamp a stylus ink writing tool (2), an actuator (16) configured to move the gripping element (17) in a retracted position wherein the scribing tool is spaced from the writing surface and an advanced position wherein the scribing tool contacts the writing surface, a control unit (ECU) configured to control the actuator (16) so as to draw one or more lines on the writing surface when the writing head (3) moves, **characterized by** comprising a writing tool closure (18) selectively movable between an open position wherein the gripping element (17) is in the advanced position so that a writing tool tip (P) contacts the writing surface outside of the writing head (3) and in a closed position wherein the gripping element (17) is in a the retracted position and a recess (20) is closed so as to establish a controlled environment for retarding a drying of the writing tool.

2. A vertical plotter (1) according to claim 1, wherein the recess (20) communicates with a through opening (22) facing the writing surface when the closure (18) is in the open position; and is suitable for housing the writing tool tip when the closure (18) is in the closed position.

3. A vertical plotter (1) according to any of the preceding claims, wherein the actuator (16) comprises a motorized rotating drum (21) carrying the gripping element (17) and the closure (18) so that the closed position is established in a predefined angular position of the drum (21).

4. A vertical plotter (1) according to claims 2 and 3, wherein the recess (20) is within a compartment (19) of the printing head (3) and wherein the drum (21) closes the compartment (19) opposite to the through opening (22).

5. A vertical plotter (1) according to any of claims 3 or 4, wherein the printing head (3) comprises an inclined guide (25) engaging the gripping element (17) to move the gripping element (17) in the retracted or the advanced position depending on the direction of rotation of the drum (21).

6. A vertical plotter (1) according to any of the preceding claims, comprising a contact seal (31) contacting the closure (18) at least in the closed position to seal the controlled environment.

7. A vertical plotter (1) according to any of the preceding claims, wherein the gripping element (17) comprises a further contact seal suitable for surrounding and contacting the writing tool (2).

8. A vertical plotter (1) according to any of the preceding claims, comprising an erasing element (S) acting on the ink of the writing tool (2) and wherein the control unit (ECU) is programmed to control the gripping element (17) to draw a digital image and to select between a first and a second pre-defined erasing method via the erasing element (S) based on the number of colored pixel of the digital image drawn on the writing surface.

9. A vertical plotter (1) according to any of the preceding claims, comprising an erasing element (S) having a heat source acting on the ink of the writing tool (2) so as to provide an erasing effect on the writing surface.

10. A vertical plotter (1) according to any of the preceding claims, comprising at least a motorized reel (4) to wind and unwind a flexible element and cause a motion of the printing head (3) on the writing surface based on command signals from the control unit (ECU); and attached to the printing head (3) so as to move on the writing surface together with the printing head (3).
